# EUROPEAN PATENT APPLICATION

(11) **EP 4 344 963 A1**
(43) Date of publication of application: **03.04.2024**
(21) Application number: 22215715.8
(22) Date of filing: 21.12.2022
(51) Int. Cl.: B60R 21/0132

(54) **PROTECTIVE DEVICE AND METHOD OF OPERATION OF THE PROTECTIVE DEVICE**

(30) Priority: 28.09.2022 EP 22461610
(71) Applicant: CovAir Sp. z o.o., 41-208 Sosnowiec (PL)
(72) Inventor: FELIKSIK, Adam, 32-332 Bukowno (PL)
(74) Representative: AOMB Polska Sp. z.o.o.

(57) **Abstract**

The invention provides a protective device suitable to be worn by the user, comprising:
- a fixing element (1) to fix the device on the user, the fiving element (1) comprising packs (4) in which envelopes (2) are arranged intended to be filled with gas and connected to the fixing element, the envelopes (2) being additionally connected to sleeves (3), all the envelopes (2) forming one volume,
- a cylinder with pressurized gas, comprising a valve, the outlet of the valve being connected to the envelopes (2),
- a measuring device to register the displacement parameters of the user, the measuring device being coupled with the valve,
- a set of measuring sensors,

characterized in that the valve is suitable to fill the envelopes (2) with gas automatically at the time when the measuring device detects that threshold values for displacement of the user are exceeded, the envelopes (2), upon inflation, enclosing the user so that they protect the entire user's body.

## Description

### Field of the Invention

The invention provides a protective device in a form of a pneumatic screen intended for protection of a human in the case of an accident, in particular a road accident. It is specifically intended for motorcyclists, three-wheel and four-wheel motorbike users, mountain bikers and road bikers, wheeled scooter users, snow mobile users who exercise so called wheeled kiting i.e. riding a cart pulled by a special kind of a wing-kite, and other vehicles in the case of which the person riding the vehicle is not covered with a shell and during an accident the person is thrown out therefrom. The device would be applicable for person practicing equestrian or alpine skiing where a probability of hitting the ground with the body during the movement at a high speed exists. It would also find applicability in motorboat sports, in particular for protection of contestants who participate in speedboat races.

### Prior Art

In the prior art there are known devices to protect the body or a body part of the user during accident or when life is at risk.

Document US 4943252 A discloses a rapidly inflatable rescue device for skiers to protect the user in the case of occurrence of an avalanche. It is composed on multiple protection concentric balls made of elastic impermeable material, the balls being stored in a non-inflated state around the waist in a pack, by means of a releasable belt and covered by a removable elastic shield. In order to activate it, when needed, it is necessary to pull a pulled ring connected to a pressure tank and a valve. As a result a pressurized gas is released into chambers between the inner wall of the ball and the outer wall of the ball, and separation of the spherical walls is restricted due to the use of wall partitions segments with air communication openings to enable free air flow through the chambers. Immediately upon pulling of the pumping ring, the person crouches down and the ball is very rapidly and strongly expanded to open the pack, to reach an inflated spherical configuration and entirely encloses the person to provide protection and floatability in the environment of snow avalanches.

Publication WO 2016132255 A1 relates to a jacket for protection of the user's body in the case of a fall, and comprising at least one inflatable chamber, a cylinder with pressurized gas for filling an air chamber, an accelerometer for detection of a change in acceleration, a control unit connected to a gyroscope to detect inclination of the user's body.

Patent EP 3171723 B1 provides a solution in a form of a protection jacket dedicated for motorcyclists. It comprises at least one inflatable chamber, an inflating device, an acceleration sensor, a control unit to send a signal to the inflating device in the case when a collision situation is detected, and a transmitting unit.

### Summary of the Invention

It is the aim of the invention to provide a protective device suitable to be worn by the user, to protect each body part of the user at each side at the time of an accident, via detection of an event and inflating of the device.

Protective device, suitable to be worn by the user, comprises:
- a fixing element for fixing the device on the user, the fixing element comprising packs in which envelopes to be filled with gas are arranged and connected to the fixing element, the envelopes being additionally connected to sleeves, all the envelopes defining one volume,
- a cylinder with pressurized gas, comprising a valve, the outlet of the valve being connected to the envelopes,
- a measuring device for registration of displacement parameters of the user, the measuring device being coupled with the valve,
- a set of measuring sensors,
and is characterized in that the valve is suitable to fill the envelopes with gas, at the time when the measuring device detects that threshold values of parameters of displacement of the user are exceeded, and the envelopes, when pumped, enclose the user so that they protect the entire user's body.

Preferably, the envelopes are connected to the fixing element permanently.

Preferably, the measuring device is suitable to register the horizontal speed, vertical speed and time periods in which speed changes occur.

Preferably, the protective device comprises at least one set of measuring sensors in a form of a built-in accelerometer assembly, and the set of sensors preferably comprises GPS and/or GSM.

Preferably, the fixing element has a form of a harness embodied as belts connected to each other.

Preferably, the packs arranged in a belt around the hips comprise from one to fifty envelopes that upon inflation protect hips, body and head of a human, while the packs positioned in the remaining part of the fixing element comprise from one to fifty envelopes that upon inflation protect hips and legs of a human.

Preferably, envelopes filled with gas to enclose the user comprise belts that press adjacent envelopes.

Preferably, one volume is defined by the envelopes and the sleeves.

A method of operation of the device comprises the steps of:
a. detecting, by the set of measuring sensors, an abrupt change in anyone of acceleration parameters,
b. opening of a valve of a cylinder with pressurized gas upon receipt of a signal from the set of measuring sensors,
c. filling the envelopes with gas such that the envelopes protect the entire user's body.

Preferably, the method comprises the step of:
d. establishing the position of the location where the event has occurred and transmitting information with coordinates to an emergency centre.

### Preferable Effects of the Invention

With the use of the device of the invention it is possible to provide effective protection for the user during any kind of accident. The entire body of the user is protected, at each side, regardless of the kind and place of the accident.

### Brief Description of the Drawings

The invention will be presented in more detail in a preferable embodiment and with reference to the enclosed drawings where:
Fig. 1 shows a view of a designed appliance on the user's body, in an intermediate phase of opening.
Fig. 2 shows a view of a designed appliance on the user's body.
Fig. 3 shows a designed appliance on the user's body at the time of complete opening.
Fig. 4 shows operation of a system in the case of a collision of a motorcyclist with an obstacle.

### Detailed Description of Preferable Embodiment of the Invention

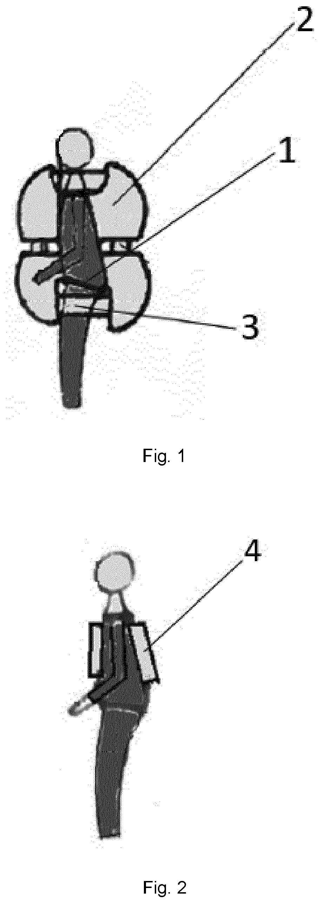

A device according to a preferable embodiment of the invention is presented in detail in Figs. 1 and 2. The device is suitable to be worn by the user, it comprises a fixing element 1 for fixing the device on the user, the fixing element 1 comprising packs 4. Within the packs 4 there are envelopes 2 intended to be filled with gas, connected to the fixing element, the envelopes 2 being additionally connected to sleeves 3, and all the envelopes 2 define one volume.

Fig. 2 shows in turn a protective device in a folded state when the user is not at risk and no exceeded preset values are detected. The envelopes 2 are within packs 4. The device also comprises a cylinder with pressurized gas, comprising a valve (not shown in any of the figures of the drawing). Preferably, the cylinder with pressurized gas is positioned in one of the packs 4. The outlet of the valve is connected to the envelopes 2. A measuring device (not shown in any of the figures of the drawing) for registration of the displacement parameters of the user is coupled with a valve and comprises also a set of measuring sensors (not shown in any of the figures of the drawing).

The valve is suitable to fill the envelopes 2 with gas automatically at the time when the measuring device exceeds threshold values of the displacement parameters of the user.

The envelopes 2, upon inflation, enclose the user so that they protect the entire user's body. It should be understood that inflated envelopes 2 define a volume that is capable to protect the user against hitting a flat or not pronouncedly protruding element of the environment or other vehicles.

Preferably, envelopes 2 are connected to the fixing element in a permanent manner and as a result the envelopes 2 are permanently fixed with the fixing element 1, and so prevent the envelopes 2 from detachment during an abrupt change in speed. This provides a safe and durable protection regardless of abrupt changes in speed and fall caused by e.g. throwing out from a motorcycle.

Protective device comprises at least one set of measuring sensors in a form of a built-in accelerometer assembly, and the set of sensors preferably comprises GPS and/or GSM.

Release of gas from the cylinder is effected upon receipt of a signal from the set of measuring sensors about abrupt changes in acceleration of the protected human. Upon activation of the system, the shields filled with gas are enclosed by belts so that they are pressed against each other and against the human body to define a compact structure.

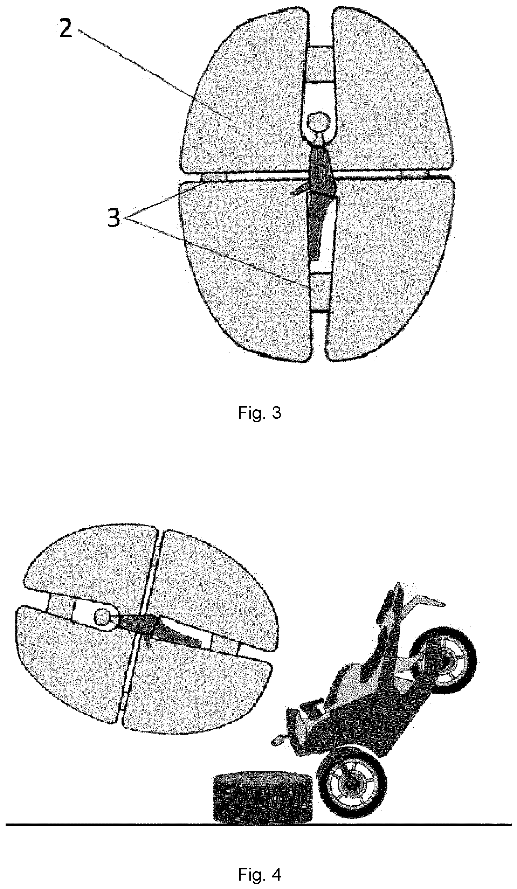

The measuring device is suitable to register the horizontal speed, vertical speed and time periods during which changes in speed occur. When anyone of these parameters exceeds threshold values, the device is automatically activated and the envelopes 2 are filled with gas to define a shield for the user's body as shown in Fig. 3.

The fixing element 1 preferably is made in a form of a harness embodied as belts connected to each other. Nevertheless, this element may have any other form known to a person skilled in the art with a knowledge on how additional equipment should be mounted on the user. The fixing element 1 may have a form of e.g. a vest, suspenders, etc.

The packs 4 arranged in a belt around the hips comprise from one to fifty envelopes 2 that upon inflation protect hips, body and head of a human, and the packs 4 arranged in the remaining part of the fixing element 1 comprise from one to fifty envelopes 2 that upon inflation protect hips and legs of a human.

The envelopes 2 and sleeves 3 define one volume and this causes that the gas released from the valve of the cylinder into one envelope 2 concurrently fills all the envelopes 2 and passes via the sleeves 3 to the adjacent envelopes 2.

The method of operation of the device is shown in Fig. 4 and it comprises the following steps:
a. detecting, by a set of measuring sensors, an abrupt change in anyone of acceleration parameters,
b. opening of the valve of a cylinder with pressurized gas, upon receipt of a signal from the set of measuring sensors,
c. filling the envelopes 2 with gas so that the envelopes 2 protect the entire user's body, said step being visible in fig. 4.

Preferably, following step c. a step d. is performed consisting on establishing the position of the location where the event has occurred and transmitting information with coordinates to an emergency centre.

## Claims

1. A protective device, suitable to be worn by the user, comprising:
- a fixing element (1) to fix the device on the user, the fixing element (1) comprising packs (4) in which envelopes (2) are arranged to be filled with gas and connected to the fixing element (1), the envelopes (2) being additionally connected to sleeves (3), and all the envelopes (2) define one volume,
- a cylinder with pressurized gas, comprising a valve, the outlet of the valve being connected to the envelopes (2),
- a measuring device to register displacement parameters of the user, the measuring device being coupled to the valve,
- a set of measuring sensors,
**characterized in that** the valve is suitable to fill the envelopes (2) with gas automatically at the time when the measuring device detects that threshold values for the displacement parameters of the user are exceeded, the envelopes (2), upon inflation, enclosing the user so that they protect the entire user's body.

2. The protective device according to claim 1, **characterized in that** the envelopes (2) are connected to the fixing element (1) permanently.

3. The protective device according to claims 1 or 2, **characterized in that** the measuring device is suitable to register the horizontal speed, vertical speed and time periods in which changes in speed occur.

4. The protective device according to anyone of claims 1-3, **characterized in that** it comprises at least one set of measuring sensors in a form of built-in accelerometer assembly, and the set of sensors preferably comprises GPS and/or GSM.

5. The protective device according to anyone of claims 1-4, **characterized in that** the fixing element (1) has a form of a harness embodied as belts connected to each other.

6. The protective device according to anyone of claims 1-5, **characterized in that** the packs (4) arranged in a belt around the hips comprise from one to fifty envelopes (2) that when inflated protect hips, body and head of a human, while the packs (4) arranged in the remaining part of the fixing element (1) comprise from one to fifty envelopes (2) that when inflated protect hips and legs of a human.

7. The protective device according to anyone of claims 1-6, **characterized in that** the envelopes (2) filled with gas to enclose the user comprise belts that press the adjacent envelopes (2).

8. The protective device according to anyone of claims 1-7, **characterized in that** one volume is defined by the envelopes (2) and sleeves (3).

9. A method of operation of a device according to anyone of claims 1-8, comprising steps of:
a. detecting, by a set of measuring sensors, an abrupt change in anyone of acceleration parameters,
b. opening the valve of a cylinder with pressurized gas upon receipt of a signal from the set of measuring sensors,
c. filling the envelopes (2) with gas so that the envelopes (2) protect the entire user's body

10. The method according to claim 9, **characterized in that** it comprises a step of:
d. establishing the position of the location where the event has occurred and transmitting information with coordinates to an emergency centre.
